**Europäisches Patentamt**

**European Patent Office**

**Office européen des brevets**

(11) Veröffentlichungsnummer: **0 401 539**
**A2**

## (12) EUROPÄISCHE PATENTANMELDUNG

(21) Anmeldenummer: **90108876.5**

(22) Anmeldetag: **11.05.90**

(51) Int. Cl.5: **C02F 1/20, C02F 1/28, C02F 1/44**

(30) Priorität: **03.06.89 DE 3918190**

(43) Veröffentlichungstag der Anmeldung:
**12.12.90 Patentblatt 90/50**

(84) Benannte Vertragsstaaten:
**DE ES FR**

(71) Anmelder: **DORNIER GMBH**
**Postfach 1420**
**D-7990 Friedrichshafen 1(DE)**

(72) Erfinder: **Wulz, Hans-Georg, Dr.**
**Urnau 17**
**D-7774 Deggenhausertal(DE)**

(74) Vertreter: **Landsmann, Ralf, Dipl.-Ing.**
**c/o DORNIER GMBH Postfach 1420**
**D-7990 Friedrichshafen 1(DE)**

(54) **Wasserstoff-Eliminator.**

(57) Entfernung blasenförmiger und gelöster Wasserstoffanteile aus Brennstoffzellen-Prozesswasser zur
Verwendung als trinkbares Wasser in Raumfahrzeugen.

EP 0 401 539 A2

## Wasserstoff-Eliminator

Die Erfindung betrifft ein Verfahren zur Entfernung von blasenförmigem und/oder gelöstem Wasserstoff aus einer Flüssigkeit, insbesondere aus Wasser.

Die Erzeugung elektrischer Energie in Raumfahrzeugen kann durch die Verwendung von Brennstoffzellenbatterien erfolgen. In den Brennstoffzellen werden die Reaktanden Wasserstoff und Sauerstoff katalytisch an den Elektroden zu Wasserdampf verbrannt.

Aus Wirtschaftlichkeitsgründen ist vorgesehen, das gebildete Prozesswasser in Raumfahrzeugen als trinkbares Wasser zu verwenden und dem Lebenserhaltungssystem zuzuführen.

Das in den Brennstoffzellen gebildete Prozesswasser wird, je nach angewandter Brennstoffzellen-Technologie entweder in einem Wasserstoffkreislauf oder in einem Elektrolytkreislauf aus der Zelle ausgetragen.

Durch bekannte Separationstechniken (Zentrifuge, Flüssigkeitszyklon, Membransparator) wird das ausgetragene Prozesswasser in einem Fall aus dem Trägergas Wasserstoff im anderen Fall aus dem Elektrolyten abgetrennt. Die erreichten Separationswirkungsgrade sind dabei nahe 100 %, jedoch stets kleiner als dieser Maximalwert.

Der Grund hierfür ist, dass der restliche Wasserstoff im abgetrennten Wasser zwar weitgehend als Bläschen, das heisst im gasförmigen Zustand abgetrennt worden ist, der im Wasser gelöste Anteil jedoch, entsprechend seiner Löslichkeit, auch nach dem Separationsvorgang im Wasser verbleibt.

Bei Verwendung des Prozesswassers als Trinkwasser tritt durch den noch verbliebenen gelösten Wasserstoff ein Unwohlsein bei den Besatzungsmitgliedern während bemannter Missionen auf. Aus Missionsberichten ist bekannt, dass die Besatzung über Beschwerden im Magen-Darm-Bereich klagte.

Aufgabe der Erfindung ist es, ein wasserstoffreies, trinkbares Wasser zu erreichen.

Diese Aufgabe wird erfindungsgemäss durch die Lehre der Patentansprüche gelöst.

Der Erfindungsgegenstand wird nachfolgend näher erläutert.

Es zeigen:

Figur 1 die Reaktionswahrscheinlichkeit von Wasserstoff über die absorbierte Menge Wasserstoff an metallischen Titan-Oberflächen mit unterschiedlichen dicken Sauerstoffbelegungen (in Monolagen),

Figur 2 die Reaktionswahrscheinlichkeit von Wasserstoff über die absorbierte Menge von Wasserstoff an metallischen FeTi-Oberflächen mit unterschiedlichen dicken Sauerstoffbelegungen (in Monolagen),

Figur 3 die Reaktionswahrscheinlichkeit von Wasserstoff über die abosrbierte Menge von Wasserstoff an einer metallischen Ti-Oberfläche mit Pd-Deckschicht, die mit Sauerstoff belegt worden ist und

Figuren 4 und 5 technische Ausführungsformen eines erfindungsgemässen Wasserstoffeliminators.

Durch den Gegenstand der Erfindung werden sowohl die blasenförmigen Restanteile des Wasserstoffs, als auch die gelösten Anteile des Wasserstoffs aus dem Prozesswasser entfernt.

Das Verfahren basiert auf der Absorption oder Permeation des Wasserstoffs aus dem Prozesswasser durch wasserstoffbindende oder wasserstofflösende Metalle oder hydridbildende oder wasserstofflösende intermetallische Legierungen. Hierfür geeignete Metalle sind die aus den Gruppen IVa und Va des periodischen Systems der Elemente, vorzugsweise die reaktiven Metalle Titan, Zirkon, Vanadium und Niob, aber aber auch jene aus der Gruppe Ib, wie Kupfer oder Silber.

Intermetallische Legierungen sind solche des $AB_2$, des $CD_5$-oder des DE-Typs.

Die Symbole stehen für:

A ... Metalle der Gruppen IVa, Va
B ... Metalle der Gruppen VIa, VIIa
C ... Metalle der Gruppe IIIa
D ... Metalle der Gruppe VIII
E ... Metalle der Gruppe Ib

Beispiele sind: $LaN_5$
$TiCr_2$

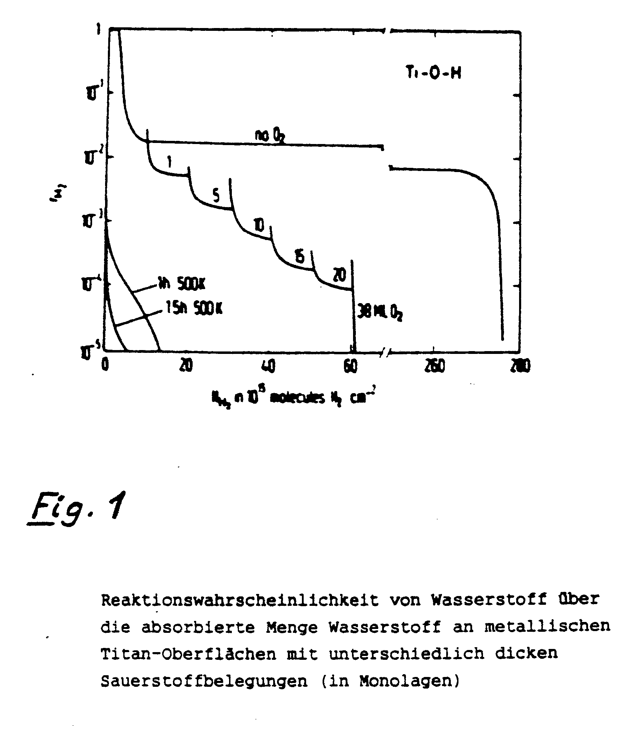

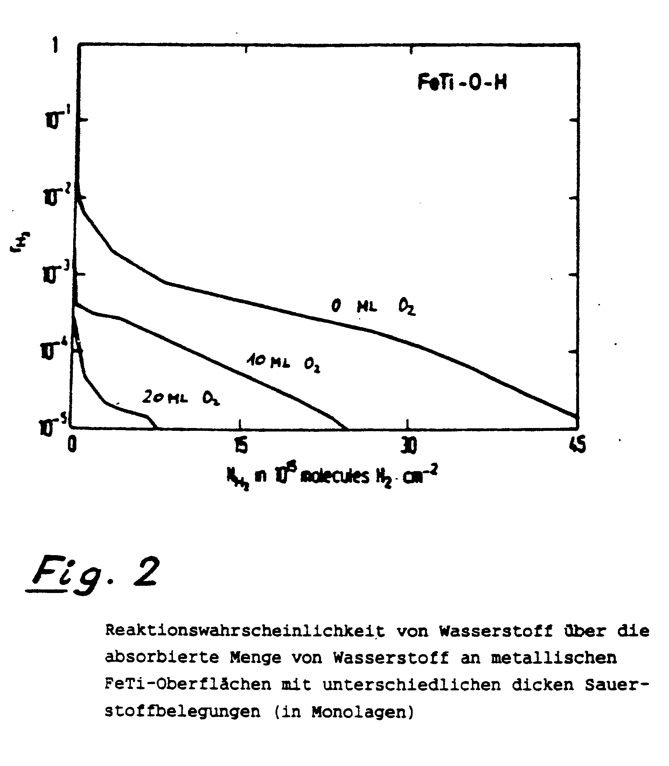

In bekannter Weise passivieren diese reaktiven Metalle oder Legierungen, wenn sie sich im Kontakt mit einem sauerstoff-oder wasserdampfhaltigen Medium (Gas oder Flüssigkeit) befinden, das heisst, sie überziehen sich mit einer für den Wasserstoff undurchdringlichen Oxyd- oder Hydroxydschicht. Figur 1 und 2 zeigen die Abnahme der Wasserstoffaufnahme einer Ti-Metalloberfläche und einer FeTi-Oberfläche mit zunehmender Sauerstoffbelegung.

Die Verhältnisse sind anders, wenn die Oberfläche eines reaktiven Metalls oder einer Legierung mit einer Schutzschicht eines reduzierbaren Metalls überzogen ist.

Es zeigt sich ein katalytischer Effekt in bezug auf die Wasserstoffaufnahme an der Oberfläche.

Bei der Wasserstoffabsorption ist die Dissoziation des Wasserstoffmoleküls der bestimmende Teilschritt der Oberflächenreaktion.

Unterschiedliche Ergebnisse aus Experimenten der Festkörperspektroskopie haben gezeigt, dass der Wasserstoff im Gitter eines Metalls oder Legierung im atomaren, das heisst dissoziierten Zustand vorliegt.

Infolge von Dissoziationsreaktionen an einer aktiven, metallischen Oberfläche wird der Wasserstoffmolekül gespalten, und der Wasserstoff kann im atomaren Zustand in das Metallgitter eindringen.

Ist eine aktive metallische Oberfläche jedoch bereits mit einer Schicht eines reaktiven Gases wie zum Beispiel Sauerstoff belegt, so kann die Dissoziation des Wasserstoffs nicht mehr stattfinden. Die Oberfläche ist passiviert.

Reduzierbare Metalle der Gruppe VIII bilden nur sehr dünne Oxydschichten, die in Anwesenheit von Wasserstoff teilweise oder gänzlich abgebaut (reduziert) werden. Die Oberfläche dieser Metalle bleibt aktiv.

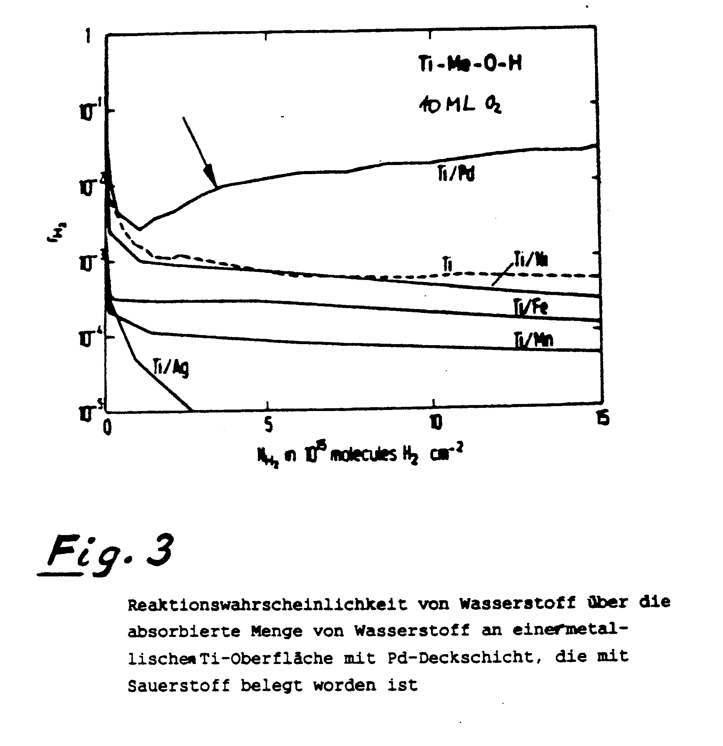

In Figur 3 ist die Reaktionswahrscheinlichkeit einer metallischen Titanoberfläche gezeigt, die mit einer Palladium-Schicht überzogen wurde und die einer Sauerstoffbegasung ausgesetzt war. Durch die Zufuhr von Wasserstoff wurde die Sauerstoffschicht völlig abgebaut, die präparierte Metallschicht zeigte danach eine gute Aufnahmefähigkeit für den Wasserstoff.

Betriebsweise des Wasserstoff-Eliminators Ein erfindungsgemässer Wasserstoff-Eliminator kann absorptiv oder permeativ gestaltet sein. Im ersten Fall wird der Wasserstoff bis zur Sättigung von der Metallstruktur absorbiert. Danach wird die Metallstruktur entweder ersetzt oder regeneriert.

Im anderen Falle wird der Wasserstoff durch eine entsprechende Metallstruktur oder Legierungsstruktur hindurchdringen, permeieren. Dies hat einen kontinuierlichen, weitgehend wartungsfreien Betrieb zu Folge.

Welches der beiden physikalischen Prinzipe Anwendung findet, hängt von der Stabilität der Bindung des Wasserstoffs mit dem verwendeten Metall oder Legierung ab.

Bildungsreaktionen und deren Rückreaktionen (Dissoziation) sind abhängig von den Zustandsgrössen Temperatur und Druck.

Bei stärkeren Bindungskräften überwiegt die Bildungsreaktion gegenüber der Dissoziation. Bei Reaktionen des Wasserstoffs mit Metallen mit hohen Bildungswärmen, das sind hydridbildende Metalle, dominiert bei Raumtemperatur die Absorption über der Desorption.

Ein kritischer Wert liegt bei etwa 10 kJ/mol.

Merkliche Desorption tritt erst bei höheren Temperaturen ein.

Eine Regeneration des Eliminators auf Absorptionsbasis erfolgt durch Heizen bei mehreren hundert Grad.

Bei Verwendung eines Metalls oder einer Legierung mit Bildungswärmen mit Wasserstoff kleiner als der angenommene kritische Wert von 10 kJ/mol ist die Konstruktion eines Eliminators auf Permeationsbasis möglich. Bei weniger stabilen Bindungen zwischen Wasserstoff und Metall oder Legierungen macht sich heben der Temperaturabhängigkeit auch die Druckabhängigkeit der Reaktion bemerkbar.

Ein als Membrane ausgebildetes wasserstofflösendes Metall oder Legierungen mit geeigneter Zusammensetzung wird den Wasserstoff auf der Seite des höheren Druckes absorbieren und auf der Seite des niedrigen Druckes desorbieren. Dadurch kommt ein Transport, eine Permeation des Wasserstoffs durch das Metall/die Legierung zustande.

Die Metall- oder Legierungsstruktur stellt für den abzutrennenden Wasserstoff eine semipermeable Membrane dar.

Ausführungsbeispiel 1

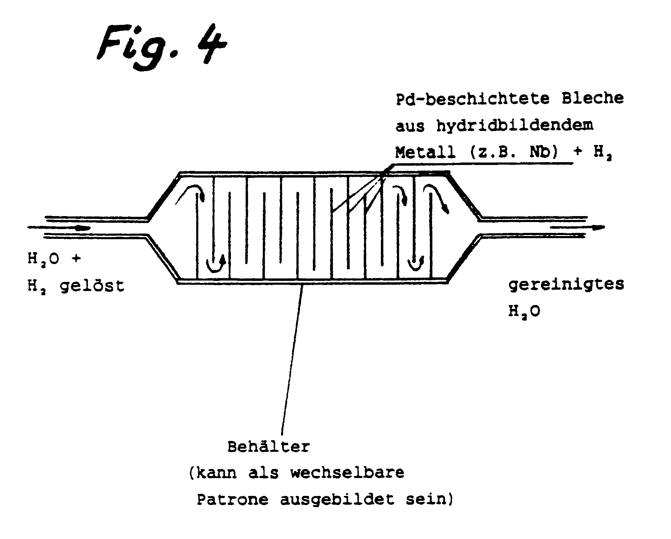

Ein Vorschlag einer möglichen Konfiguration eines Wasserstoff-Eliminators auf absorptiver Basis ist in Figur 4 dargestellt. Es ist ein Apparat mit meanderförmig angeordneten, mit Palladium beschichteten Blechen aus einem wasserstofflösenden Metall oder Legierung schematisch gezeigt. Aus dem vorbeifliessenden Wasserstrom wird der Wasserstoff durch Absorption absepariert.

Ausführungsbeispiel 2

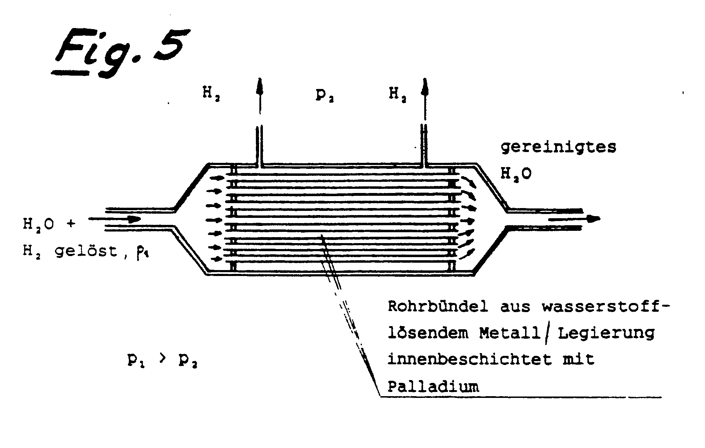

Ein alternativer Vorschlag auf permeativer Basis ist in Figur 5 dargestellt.

Dieser Apparat besteht aus einem Bündel von Rohren oder Kapillaren aus einem wasserstofflösenden Metall oder einer Legierung, die mit einem katalytisch aktiven Metall der Gruppe VIII innen beschichtet sind. Das mit Wasserstoff beladene Wasser strömt durch die Rohre hindurch. Der gelöste Wasserstoff wird von der aktiven Oberfläche der Rohrinnenwand absorbiert und permeiert infolge des angelegten Druckgefälles zur Rohraussenwand und tritt dort in die Umgebung des niedrigen Druckes über.

**Ansprüche**

1. Verfahren zur Entfernung von blasenförmigem und/oder gelöstem Wasserstoff aus einer Flüssigkeit, insbesondere aus Wasser, dadurch gekennzeichnet, dass die Flüssigkeit mit einer beschichteten Metallstruktur oder einer beschichteten Metallegierungsstruktur in Kontakt gebracht wird, dass die Struktur den Wasserstoff absorbiert oder nach Art einer semipermeablen Membran abtrennt.

2. Vorrichtung zur Durchführung des Verfahrens nach Anspruch 1, dadurch gekennzeichnet, dass die Struktur ein Metallschaum grosser Oberfläche ist.

3. Vorrichtung zur Durchführung des Verfahrens nach Anspruch 1, dadurch gekennzeichnet, dass die Struktur ein Metallgitter oder ein Metallsieb ist.

4. Vorrichtung zur Durchführung des Verfahrens nach Anspruch 1, dadurch gekennzeichnet, dass die Struktur aus Metallröhren, Metallkapillaren oder Metallblechen besteht.

5. Struktur für Vorrichtungen nach Ansprüchen 2, 3 oder 4, dadurch gekennzeichnet, dass der Werkstoff ein Metall aus Gruppe IVa und Va des periodischen Systems, vorzugsweise Titan, Zirkon, Vandium oder Niob ist.

6. Struktur für Vorrichtungen nach Ansprüchen 2, 3 oder 4, dadurch gekennzeichnet, dass der Werkstoff ein Metall aus der Gruppe Ib des periodischen Systems, vorzugsweise Kupfer oder Silber ist.

7. Struktur für Vorrichtungen nach Ansprüchen 2, 3 oder 4, dadurch gekennzeichnet, dass der Werkstoff eine intermetallische Legierung, des $AB_2$, $CD_5$ oder DE Typs ist, es bedeuten:

A ... Metalle der Gruppen IVa, Va
B ... Metalle der Gruppen VIa, VIIa
C ... Metalle der Gruppe IIIa
D ... Metalle der Gruppe VIII
E ... Metalle der Gruppe Ib.

8. Werkstoffe nach Ansprüchen 5, 6 oder 7, dadurch gekennzeichnet, dass die Metalle oder Legierungen mit einer Schicht aus Platinmetall der Gruppe VIII des periodischen Systems überzogen sind.

9. Werkstoff nach Anspruch 8, dadurch gekennzeichnet, dass die Dicke der Beschichtung 10 - 100 nm (0.01 - 0.1 μm) beträgt.

## _Fig. 1_

Reaktionswahrscheinlichkeit von Wasserstoff über
die absorbierte Menge Wasserstoff an metallischen
Titan-Oberflächen mit unterschiedlich dicken
Sauerstoffbelegungen (in Monolagen)

## Fig. 2

Reaktionswahrscheinlichkeit von Wasserstoff über die
absorbierte Menge von Wasserstoff an metallischen
FeTi-Oberflächen mit unterschiedlichen dicken Sauerstoffbelegungen (in Monolagen)

# Fig. 3

Reaktionswahrscheinlichkeit von Wasserstoff über die absorbierte Menge von Wasserstoff an einer metallischen Ti-Oberfläche mit Pd-Deckschicht, die mit Sauerstoff belegt worden ist

# Fig. 4

Pd-beschichtete Bleche
aus hydridbildendem
Metall (z.B. Nb) + $H_2$

$H_2O$ +
$H_2$ gelöst

gereinigtes
$H_2O$

Behälter
(kann als wechselbare
Patrone ausgebildet sein)

# _Fig. 5_

$H_2$    $p_2$    $H_2$

gereinigtes
$H_2O$

$H_2O$ +
$H_2$ gelöst, $p_1$

Rohrbündel aus wasserstoff-
lösendem Metall / Legierung
innenbeschichtet mit
Palladium

$p_1 > p_2$